# EUROPEAN PATENT APPLICATION

(11) **EP 2 562 312 A2**
(43) Date of publication of application: **27.02.2013**
(21) Application number: 12179326.9
(22) Date of filing: 06.08.2012
(51) Int. Cl.: E02F 9/24

(54) **Data relating to buried utilities with exclusions zones**

(30) Priority: 22.08.2011 US 201113214869
(71) Applicant: DEERE & COMPANY, Moline, Illinois 61265-8098 (US)
(72) Inventor: Montgomery, James L, Dubuque, IA Iowa 52001 (US)
(74) Representative: Münch, Christian

(57) **Abstract**

A system is provided for use in work machines that determines the location of the work machine 12 and compares such location to reported location of underground utilities 50, 60, 70, 80, 90. The system further provides indications of when an implement 28 of the work machine 12 enters an exclusion zone 100 proximate the underground utilities 50, 60, 70, 80, 90.

## Description

### Field

The instant disclosure relates generally to an earth excavating machine having a means of locating a position on the earth and/or beneath the surface of the earth. The present disclosure relates more specifically to an earth excavating machine having software onboard that monitors the geographic workspace of the machine and prevents undesired interactions with excluded locations.

### Background & Summary

Excavation machines of various descriptions find application in the installation, removal, and repair of below and above ground utilities and structures. Typical below ground utilities include water mains, sewers, conduit for electrical and communications lines; electrical and communications lines installed without conduit, subway transit tunnels, water tunnels and the like.

Below ground installation of utilities such as electrical and communication lines removes the utility lines from the visual appearance of the landscape. The location of underground utilities is generally established in advance by design engineers and provided to persons installing the utilities in the form of drawings. Location includes not only the X-Y-axes location of the utility with respect to the surface of the earth, but also includes location on the Z-axis, e.g., the distance beneath the surface of the earth or possibly referenced to sea level. In practice, the actual location of underground utilities may deviate from the location described in preconstruction drawings because of interference below the surface of the earth resulting from rocks, or rock formation, trees, building foundations or previously installed utilities unknown to the design engineers. In anticipation of the installation of additional below ground utilities and structures in the vicinity of a first structure, and in anticipation of possible repair or replacement of a first underground utility in a vicinity, and to prevent subsequent excavations from encountering unmarked sub-surface utility structures or sub-surface obstructions, engineers make a record of the location of the utility, as installed and possibly other sub-surface obstructions. Such locations are recorded on drawings known as "as-built drawings".

Such "as-built drawings" may be made with, or without, the aid of technology disclosed in US Patent Publication 2009/0112472, titled Three Dimensional Feature Location From An Excavator, filed October 26, 2007 and its continuation-in-part application also titled Three Dimensional Feature Location From An Excavator, filed August 23, 2011, the disclosures of both applications are expressly incorporated herein by reference.

According to a first embodiment, the present disclosure includes a work machine comprising: a body; a computing system coupled to the body, the computing system having data describing the location of at least one underground feature; an implement extending from the body capable of moving earth and capable of coming into contact with the at least one underground feature; a positioning system coupled to the body and in communication with the computing system, the positioning system providing data that is passed to the computing system such that the computing system can determine a location of the work machine and an orientation of the work machine; and software stored in memory electrically coupled to the computing system. The software including instructions that when interpreted by the computing system perform the steps of: determining an exclusion zone, the exclusion zone being defined as a zone within a defined proximity of the at least one underground feature; monitoring movement of the implement; and preventing movement of the implement into the exclusion zone.

The exclusion zone can be customizable by a user of the work machine. Alternatively, it is also possible that the exclusion is customizable according to features around which the exclusion zone is located.

In an additional aspect of the first embodiment, the work machine further comprises at least one sensor coupled to the computing system and providing data describing the position of the implement to the computing system. The sensor may include a plurality of sensors which are located at articulation points of the work machine.

In another additional aspect of the first embodiment, the work machine includes a display viewable by a user of the work machine and showing a map of a workspace and relative positioning of the work machine in the workspace. The display can be a part of a tablet computing device.

According to a second embodiment, the present disclosure includes a computer implemented system for monitoring the relative position of a work machine implement and an underground feature, including: a first processing sequence that retrieves a map of a workspace, the map including data regarding an underground feature; a second processing sequence that receives data from a global positioning system device coupled to the work machine; a third processing sequence that uses the data from the global positioning device to determine a location and orientation of the work machine; a fourth processing sequence that retrieves data regarding an implement attached to the work machine; a fifth processing sequence that determines the position of the implement; a sixth processing sequence that retrieves data describing an exclusion zone associated with the underground feature; a seventh processing sequence that compares the position of the implement to the exclusion zone.

### Brief Description of the Figures

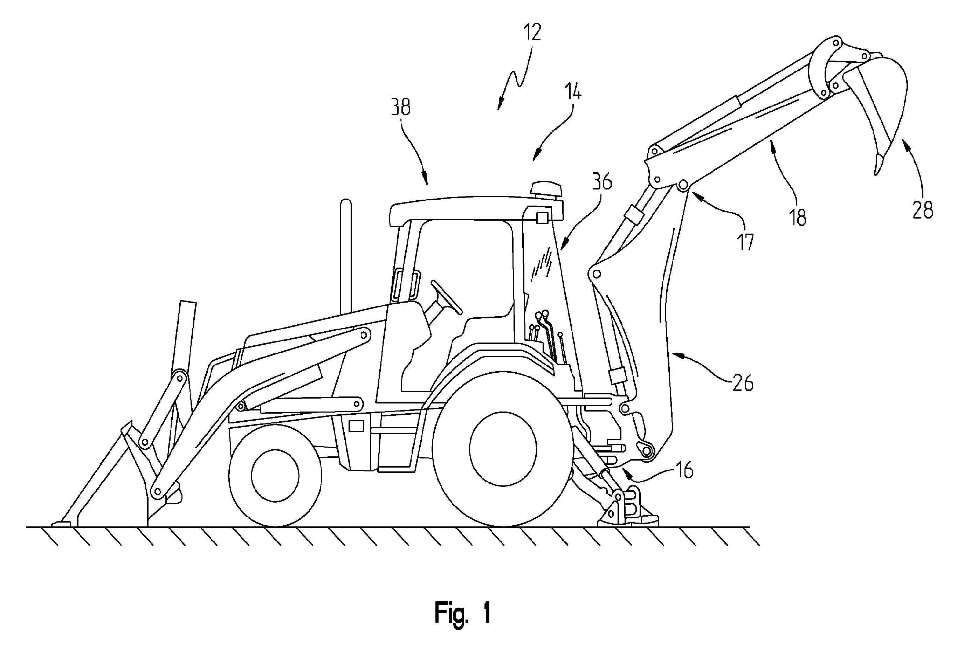

Fig. 1 illustrates an excavator equipped with offset range-finding capabilities;
Fig. 2 illustrates a display of the excavator of Fig. 1;
Fig. 3 illustrates interaction of data structures running on an on-board computer of the excavator of Fig. 1; and
Fig. 4 illustrates display of Fig. 2 showing encroachment into an exclusion zone.

### Detailed Description

The instant disclosure provides concepts finding utility with excavation machines 12 including tracked excavators, wheel-based excavators, and tractor-based backhoes. The location of an excavator, or other machine for adjusting and moving surface and below surface earth, can be determined by a global positioning device (GPS) 30. GPS device 30 determines the location of its antenna 14 via transmissions from geosynchronous satellites. In that antenna 14 is located on machine 12, machine location may be determined via the satellite transmissions. The present disclosure contemplates excavation machine 12 having multiple GPS antennas 14 such that the direction that excavation machine 12 is facing can also be determined along with orientation of machine 12. Antennas 14 are illustratively positioned at top forward corners of cab 38 of machine 12.

As previously noted, information regarding geographic workspaces can be obtained from workspace drawings or files that are constructed via measurements taken by hand, by GPS, or otherwise. Such geographic workspace information includes information regarding the placement of sub-surface features such as utility lines. Such drawings can be formatted according to any number of known formats, including popular CAD formats.

Excavation machine 12 includes means for inputting workspace data, means for storing workspace data, means for displaying workspace data, and means for interacting with workspace data.

The means for inputting workspace data are any communication device that allows for workspace data to be provided to an onboard computer of excavation machine 12. In the present example, a USB port 20 capable of receiving a flash drive having workspace data files thereon is provided as the means for inputting. Alternatively, the means for inputting is simply a keyboard that allows a user to type in workspace data. In yet another alternative, the means for inputting is a wireless link with the ability to download or otherwise receive data.

Excavation machine 12 then stores the data, such as in non-volatile memory 24, and provides for display of the data on display 34 of machine 12. Display 34 is provided as a simple flat screen display tablet. However, embodiments are envisioned where display 34 is a heads-up style display where images are projected or otherwise displayed on windows 36 of cab 38. The programming of the on-board computer includes software that can interpret the received and stored workspace data to provide a visual representation approximating a map of the workspace. Such a map includes the locations of various underground elements indicated by the received workspace data. Options are provided that allow aerial/satellite maps, such as those obtained from Google Maps or otherwise, to be combined with the workspace data so that a user can more easily correlate map positions with real-world topology.

The means for interacting includes receiving and integrating information regarding the location of excavation machine 12 with the received and stored workspace data. In one embodiment such interacting takes the form of showing the location of excavation machine 12 on the map on display 34. Still further, the location of implements, such as boom arm 26 and bucket 28 are shown on display 34. As will be described below, such interacting also includes placing restrictions on the placement of excavation machine 12.

As previously noted the location of GPS antenna 14 on machine 12 is known to the programmers of the software onboard excavation machine 12 or is input by a user. Similarly, the relative offset of antenna 14 to other parts of machine 12 is also known to the software, either by being preset or being input by a user. An offset is the distance, direction, orientation, and depth (or height) of a geographic feature or machine part determined with respect to the location of the GPS antenna or other location on machine 12. When the offset is combined with a GPS determined location of machine 12, the location of the feature or machine part can be identified in three coordinates. A partial list of relevant offsets include those between antenna 14 and swing pin 16, the length and angle and direction of boom arm 26 (also described as the offset between swing pin 16 and boom pin 17), the length and angle of dipper arm 18, and the length, width, and angle of bucket 28 or other digging implement. The offsets are used to determine GPS locations of the pieces of machine 12. Of particular interest are the edges of bucket 28 in that they provide the most distal point on the digging apparatus that could interact with the geography. Such pieces of excavation machine 12 are also then displayed on display 34 in real-time. Additionally, information such as an arc defining the reach of bucket 28 of excavation machine 12 can be depicted on display 34.

It should also be appreciated that excavation machine 12 can take on different buckets 28, or other implements, each having different sizes and shapes, thus producing different offsets associated therewith. Accordingly, the identity of bucket 28 is also provided to the on-board computer. While the raw measurement data of bucket 28 can be provided to the computer, the computer may also have pre-stored configuration files that provide the offset data for various common buckets. Similarly, sizes of the other various pieces (boom arm 26, dipper arm 18, etc.) are also known such that the perimeters thereof are accounted for in the computer. Different buckets 28 can be identified to the computer via user entry, or through an automated means, such as an RFID reader located near the end of dipper arm 18 (and in communication with the computer) and a RFID tag located on bucket 28.

To establish the location of bucket 28 from the swing-pin 16, several axes of rotation and optionally a linear extension in the form of the variable extension on the dipper arm 18 are encountered. The first axis of rotation is the entire excavator arm itself by rotating the table of excavation machine 12 about swing-pin 16, or in the case of a tractor mounted back-hoe, rotating boom arm 26 on a backhoe equipped tractor about swing-pin 16. In the case of an excavator operable with a rotating table, it may not be equipped with an actual 'swing-pin', nonetheless, for purposes of the description herein, such table type excavators will be discussed as if a swing-pin were present.

For rotating table-type excavators, data to determine the angle of boom arm 26 and dipper arm 18 may be provided as a part of the signal from the local positioning equipment, or determined by the receiver on the excavator. For excavators equipped with an actual swing pin, a rotary encoder at the swing pin provides data to the on board computer to determine the direction angle e of boom arm 26. The radial orientation of each rotation axis may be measured by a rotary encoder. When combined with algorithms appropriate for the individual excavation machine 12, the computer can determine the orientation of the dipper arm, and the distance of bucket 28 with respect to the swing-pin (actual or virtual) 16.

For excavators equipped with a dipper extension (not shown), a linear encoder and appropriate algorithm provide the computer with the additional data required to calculate the position of bucket 28 on excavators so equipped.

The working environment of excavators may include uneven terrain. The body of the excavator may be oriented such that the pitch and roll of the excavator deviates from horizontal and vertical. Pitch and roll measurement are determined by noting the difference in location of antennas 14 mounted on the excavator cab or elsewhere on the frame of the tractor or excavator which provide data to the computer respective to pitch and roll of the excavator 'swing-pin' which is rigidly connected with the excavator mainframe. In like manner, pitch and roll acting on the tracks of an excavator is translated to the bucket 28 of excavation machine 12 through a rigid frame and the boom 26 and dipper arms 18. However, various inclinometers and other sensors can also provide this information. All of the above serves to provide information about the location of excavation machine 12, including but not limited to bucket 28. This information is combined with the mapping information in the computer to provide a real-time interactive representation of the workspace in which excavation machine 12 is located. Such mapping information informs a user regarding the various features of the workspace and the relative position of the parts of excavation machine 12 to the workspace features. Such mapping information provides a visual contextual rendering of the relative spacing of machine 12 in the workspace and of features of the workspace and exclusion zones (see below) tied to features of the workspace.

Along with noting the positions of workspace features (trees, buildings, underground utilities), such features can also be associated with a setback or "exclusion zone." Such an exclusion zone takes the form of, for example, an instruction for the computer to now allow bucket 28 within 5 feet of a gas line. The setback or "exclusion zone" can be customized per job or can be constant across jobs for similar workspace features. The computer that synthesizes all this data is either the same computer or is linked to a computer that controls movement of the various parts of excavation machine 12. Accordingly, movement of excavation machine 12 can be arrested when such movement would place a part of excavation machine 12 within an exclusion zone 100 (an exclusion zone 100 encroachment). Such arresting can be one of at least two types. The first type is an absolute arresting. In such embodiments, intrusion into an exclusion zone is absolutely forbidden. No movement of excavation machine 12 is permitted that would intrude into an exclusion zone. A second type is more of a warning. An attempt at movement that would intrude into an exclusion zone is met with an arresting of movement and a notification of some kind, such as a message on display 34. In addition to the message, an option is provided to allow the user to override the exclusion zone. Such override can be a one-time override, a permanent override specific to one portion of the specific exclusion zone, a permanent override for the entire feature, or otherwise. Thus, the warning would provide the user with notice to proceed with a heightened amount of care. Embodiments are envisioned in which no arresting takes place, but rather only a audible warning, visual warning, or both are presented to the user. Additionally, the arresting need not be immediate, but rather can be a gradual slowing of the impinging member to a halt.

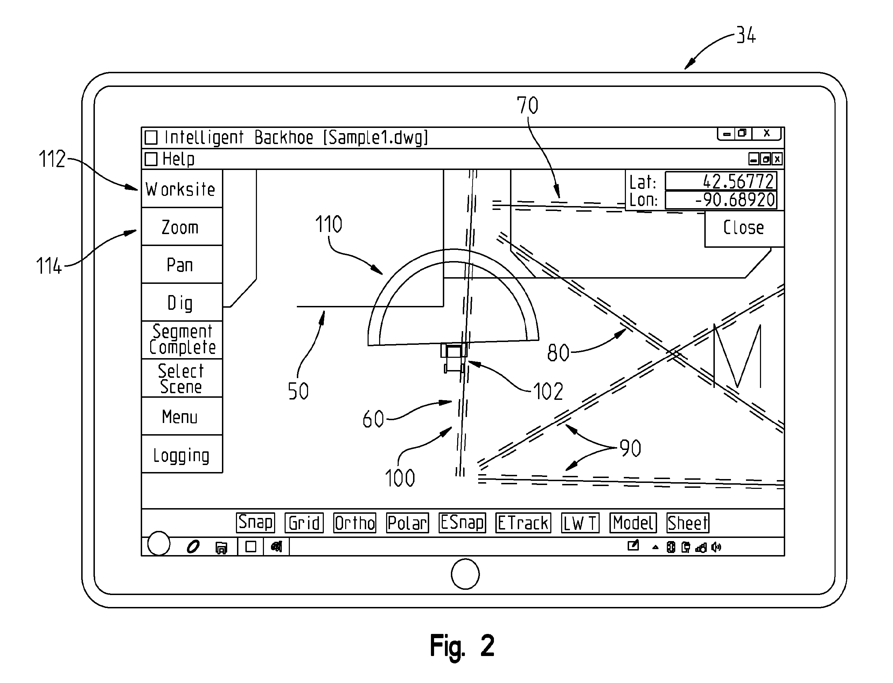

Fig. 2 shows a located sub-surface feature in an excavation. The computer provides identity of the feature by appropriate description or notation, for example: words or colors. Software of the computer interprets the provided workspace data and provides the map of Fig. 2 on display 34. By way of example, buildings can be shown by yellow lines 50, gas lines are shown by red lines 60, water lines are shown by orange lines 70, electrical lines are shown by purple lines 80, other features 90 such as sewer can be shown by other colors such as blue and white. Utility lines can be further differentiated based on diameters of the lines/conduit that they occupy (i.e. sewer mains and service lines could be colored differently). Simlarly, known locations of other above ground features such as trees and shrubs can also be shown. For each feature having one, the computer/display 34 also provides a visual display of the exclusion zone 100. Exclusion zone 100 is illustratively shown using dotted lines 102 and shading 104. Dotted lines 102 are used to mark the edges of exclusion zone 100. Shading 104 is provided between dotted lines 102. Illustratively, shading 104 is provided between dotted lines 102 when exclusion zone 100 is violated. Embodiments are also envisioned where violation of an exclusion zone also generates an e-mail that notifies other entities of the incursion.

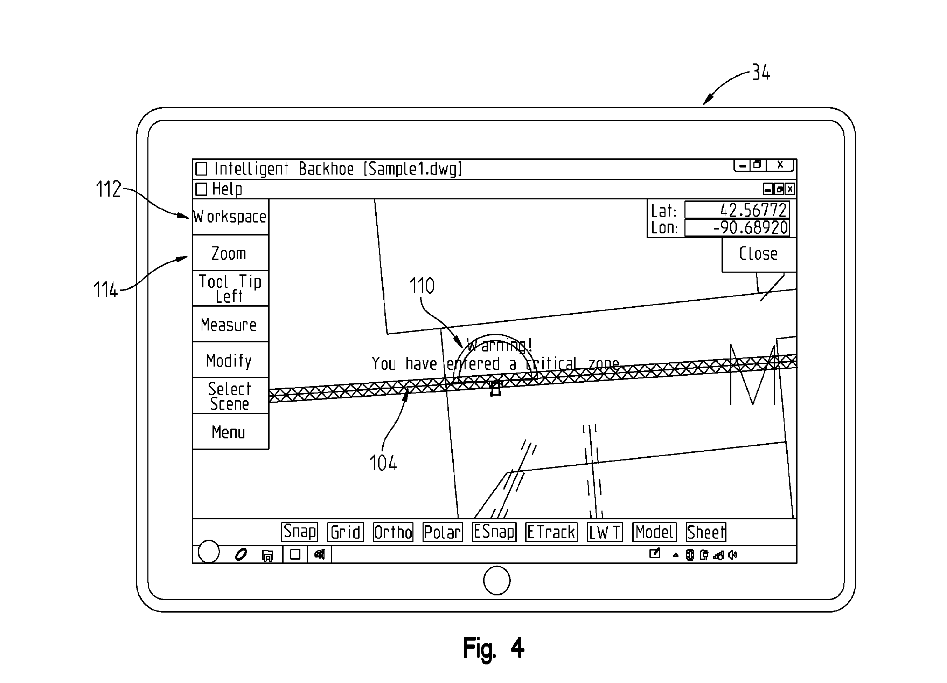

Fig. 4 also shows a representation of machine 12. In addition to showing a representation of the main body of machine 12, a semi-circular area 110 is also provided at one end of machine 12. Semi-circular area 110 represents that field of travel that is possible by the implement (such as bucket 28) attached to machine 12.

Display 34 is illustratively a touchscreen, accordingly, the screen provides a plurality of commands/input/informational buttons. Such buttons include informational buttons 112 that give context to what is being viewed. Examples of informational buttons 112 are ones that indicate whether an entire worksite is being shown or a workspace is being shown (where a workspace is smaller and more local to machine 12 relative to "worksite"). Command buttons 114 include "zoom" and "pan." A zoom button allows a worksite view to be zoomed in to a workspace view. Similarly, zooming out is also possible. A pan button allows the map to be translated across the screen of display 34. Command buttons 114 also include various functions relating to loading, saving, importing, and exporting files. Additionally, buttons are provided that are used for data gathering and creation of "as-built" drawings as described in the co-owned application titled Three Dimensional Feature Location From An Excavator, filed August 23, 2011. Still other buttons are provided that allow customization of display features and customization of settings regarding the size of exclusion zones 100 for various utility types. Additionally buttons are provided that allow access to screens in which settings and measurements (such as dimensions of bucket 28) can be entered and adjusted.

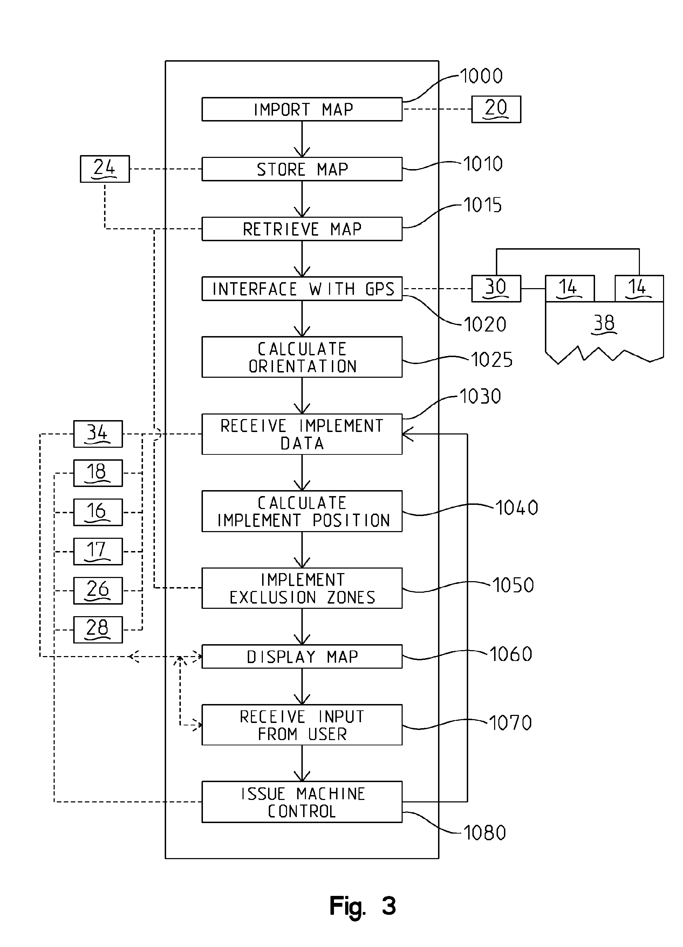

Accordingly, it should be appreciated that the software running on the computer onboard machine 12 includes a plurality of data structures. Such data structures, as shown in Fig. 3, include data structures for importing map data 1000, for storing map data 1010, for retrieving map data 1015, for interfacing with a GPS device 1020, for calculating machine orientation 1025, for receiving implement relative positioning data 1030, for calculating implement absolute positioning data 1040, for implementing exclusion zones 1050, for displaying map and positioning data 1060, for receiving user input 1070, and for issuing machine control signals 1080.

The data structure for importing map data 1000 interfaces with USB port 20 (or other similar interface) to obtain map data. This data is passed to the data structure for storing map data 1010. Structure 1010 interfaces with memory 24 to store the map data. The data structure for retrieving map data 1015 interfaces with memory 24 to retrieve previously stored map data. The data structure for interfacing with a GPS device 1020 communicates with GPS device 30 (which is in communication with the plurality of antennas 14) to obtain GPS coordinates for antennas 14. The data structure for calculating machine orientation 1025 takes the obtained GPS coordinates and determines the position of machine 12 as well as compares the GPS readings from each antenna 14 to determine the orientation of machine 12. The data structure for receiving implement relative positioning data 1030 interfaces with display 34 for any user input data regarding the particular implement being used (or alternatively with another indicator of the implement, such as an RFID reader). Structure 1030 also interfaces with sensors monitoring dipper arm 18, swing pin 16, boom pin 17, boom arm 26, and bucket 28. Each of the sensors allows the relative position of each piece 16, 17, 18, 26, 28 to antennas 14 to be calculated. This relative positioning data is then passed to structure 1040. The structure for calculating implement absolute positioning data 1040 takes the relative positioning data from structure 1030 and combines it with the GPS positioning and orientation data from structure 1025 to determine the physical space inhabited by each piece 16, 17, 18, 26, 28.

The structure for implementing exclusion zones 1050 takes the retrieved map data from structure 1015 and retrieves data from memory 24 regarding the settings for exclusion zones. Structure 1050 then applies the exclusion rules to the map data. The exclusion zone data along with the map data is passed to structure 1060.

The structure for displaying map and positioning data 1060 takes the passed data and presents an integrated data set to display 34. Structure for receiving user input 1070 allows a user to interact with display 34 to alter the displayed map and to otherwise initiate other data structures (such as those that allow for creation of new map features, to override exclusion zones, or otherwise). Structure 1070 also receives input regarding desired movement of machine 12 (including movement of pieces 16, 17, 18, 26, 28. Input regarding movement commands is passed to structure 1080.

Structure for issuing machine control signals 1080 takes the passed movement commands and compares the movement command data with exclusion zones. If structure 1080 determines that the movement commands will not cause an exclusion zone to be violated, the movement commands are passed along to other systems that actually implement the movement. If structure 1080 determines that the movement commands will cause an exclusion zone to be violated, structure 1080 does not pass along the movement commands to the movement systems. Rather, structure 1080 causes warnings to be displayed on display 34 regarding the exclusion zones interaction with the requested movement of machine 12.

If movement commands are passed along from structure 1080 such movement impacts either the relative location of the implement 28 and GPS antenna 14, or impacts the location of GPS antenna 14. Either way, the calculations to determine the implement's absolute position are repeated. As should be understood, many of the structures are implemented in an iterative fashion such that the map on display 34 is constantly being redrawn and the position of machine 12 and its parts is constantly being re-asessed. In this way, a real-time representation of machine 12 in the workspace is presented on display 34. Similarly, the relative position of machine 12 and exclusion zones 100 is constantly updated to provide an accurate interaction therebetween.

While this application discusses use of satellite based GPS, the concepts could also be used along with local positioning stations and other known similar means. Similarly, the utility and benefits described herein as well as modifications and adaptations by those skilled in the art may adapt the invention to specific uses without departing from the spirit and scope of the invention as claimed.

## Claims

1. A work machine comprising:
a body;
a computing system coupled to the body, the computing system having data describing the location of at least one underground feature (50, 60, 70, 80, 90);
an implement (28) extending from the body capable of moving earth and capable of coming into contact with the at least one underground feature (50, 60, 70, 80, 90);
a positioning system (30) coupled to the body and in communication with the computing system, the positioning system (30) providing data that is passed to the computing system such that the computing system can determine a location of the work machine (12) and an orientation of the work machine (12); and
software stored in memory (24) electrically coupled to the computing system, the software including instructions that when interpreted by the computing system perform the steps of:
determining an exclusion zone (100), the exclusion zone (100) being defined as a zone within a defined proximity of the at least one underground feature (50, 60, 70, 80, 90);
monitoring movement of the implement (28); and
determining when called for movement of the implement (28) would place the implement (28) within the exclusion zone (100).

2. The work machine according to claim 1, further including at least one sensor coupled to the computing system, the at least one sensor providing data describing the position of the implement (28) to the computing system.

3. The work machine of claim 2, further including a display (34) viewable by a user of the work machine (12), wherein the at least one sensor includes a plurality of sensors located at articulation points (16, 17) of the work machine (12) and wherein data from the plurality of sensors combined with data from the positioning system (30) provide input to the display (34) to allow the display (34) to show positioning of the implement (28).

4. The work machine according to claim 1, further including a display (34) viewable by a user of the work machine, wherein the display (34) showing a map of a workspace and relative positioning of the work machine (12) in the workspace and provides a visual indication (102, 104) of the exclusion zone (100).

5. The work machine of claim 4, wherein the position of the work machine (12) is iteratively updated to provide a real-time representation of the work machine (12) and its relative position in the workspace.

6. The work machine of claim 1, wherein the software additionally includes instructions that when interpreted by the computing system perform the step of preventing movement of the implement (28) into the exclusion zone (100).

7. A computer implemented system for monitoring the relative position of an implement (28) of a work machine (12) and an underground feature (50, 60, 70, 80, 90), including:
a first processing sequence (1015) that retrieves a map of a workspace, the map including data regarding an underground feature (50, 60, 70, 80, 90);
a second processing sequence (1020) that receives data from a global positioning system device (30) coupled to the work machine (12);
a third processing sequence (1025) that uses the data from the global positioning device (30) to determine a location and orientation of the work machine (12);
a fourth processing sequence (1030) that retrieves data regarding an implement (28) attached to the work machine (12);
a fifth processing sequence (1040) that determines the position of the implement (28);
a sixth processing sequence (1050) that retrieves data describing an exclusion zone (100) associated with the underground feature (50, 60, 70, 80, 90);
a seventh processing sequence (1080) that compares the position of the implement (28) to the exclusion zone (100).

8. The system of claim 7, further including an eighth processing sequence (1060) that displays the map data on a display (34).

9. The system of claim 8, wherein the eighth processing sequence (1060) further includes a representation of the work machine (12) and the exclusion zone (100) on the map displayed on the display (34).

10. The system of claim 9, wherein the work machine (12) is displayed on the display (34) according to data received from the second processing sequence (1020).

11. The system of claim 7, further including a ninth processing sequence (1070) that receives data indicative of a desired movement of the work machine (12) from a first position to a second position.

12. The system of claim 11, further including a tenth processing sequence (1080) that compares the second position to the exclusion zone (100).

13. The system of claim 12, wherein the tenth processing sequence (1080) further includes the step of preventing movement of the work machine to the second position when the second position is within the exclusion zone (100).

14. The system of claim 7, wherein the fourth processing sequence (1030) includes retrieving data describing the dimensions of the implement (28), the implement (28) being removable.

15. The system of claim 7, wherein the fourth processing sequence (1030) includes receiving data regarding the position of at least one linkage disposed between a source (14) of global positioning system data and the implement (28).
